# EUROPEAN PATENT SPECIFICATION

(11) **EP 0 359 300 B1**
(45) Date of publication and mention of the grant of the patent: **10.03.1993**
(21) Application number: 89202116.3
(22) Date of filing: 21.08.1989
(51) Int. Cl.: A23C 9/123

(54) **Plant for producing yoghurt**
Vorrichtung zur Herstellung von Yoghurt
Installation de préparation de yaourt

(30) Priority: 19.08.1988 NL 8802060
(43) Date of publication of application: 21.03.1990
(73) Proprietor: Tree Investments B.V., NL-2992 AM Barendrecht (NL)
(72) Inventor: de Bruijn, Dirk, NL-3466 LB Waarder (NL)
(74) Representative: Kooy, Leendert Willem

(56) References cited:
- DE-B- 1 011 268
- FR-A- 2 268 667
- FR-A- 2 483 864
- J. RASIC et al.: "Fermented fresh milk products", vol. 1, Yoghurt, Scientific Grounds, Technology, Manufacture and Preparations, 1978, pages 304-321, Bern, CH
- VOEDINGSMIDDELENTECHNOLOGIE-VMT, vol. 11, nos. 21/22, 24th-31st May 1978, pages 16-17; "Voedselhulp in optimale vorm"
- VOEDINGSMIDDELENTECHNOLOGIE, vol. 22, no. 14/15, July 1989, page 35; "Mobiele yoghurtproduktie"

## Description

The present invention relates to a plant for producing yoghurt, and particularly so-called farm yoghurt, comprising a milk storage tank, a pasteurizer, a separator, an endurance heater, one or more inoculation tanks, a filling machine, a packaging unit and also an incubating and cooling chamber.

Yoghurt is i.a. distinguished into factory yoghurt or stirred yoghurt and farm yoghurt. The public generally tends to associate farm yoghurt with a product derived direct from nature, contrary to factory or farm yoghurt, and thus prefers farm yoghurt. It would also be possible to produce farm yoghurt on a factory, but then it is prohibited to calll it farm yoghurt, and therefore it has so far been produced on farms, also in order to save the cost of transporting the milk and in order to be able to sell it direct to the consumer.

DE-B-1011268 discloses a process and a system for producing yoghurt.

Presently, the procedure for preparing so-called farm yoghurt on a farm is as follows. The cow's milk is collected in a tank, of which the contents, depending on the size of the farm and in particularly on the number of cows, may vary from ± 1500 up to ± 5000 l. When the tank is full, the milk is heated in a boiler pasteurizer up to ± 90°C, subsequently inoculated in a tank and manually poured into 1 l beakers. Sometimes a filling machine is available for this filling process. Finally the beakers with farm yoghurt are incubated in a sealed chamber, up to the point where the desired taste and quality has been obtained. Although a good taste and a reasonably good quality can be obtained by this known method, it is at any rate laborious as the farmer cannot apply an automated, continuous process for preparing farm yoghurt. It is virtually impossible on a farm to provide the high level of energy required for that purpose. Apart from that it is impossible to reach a high degree of hygiene on a farm, and particularly continuously, as is required for the preparation of foodstuffs.

The invention aims to remove the drawbacks of this known process.

This aim is attained in that, according to the invention, at least the separator, the pasteurizer, the endurance heater, the inoculation tanks, the filling machine and the packaging unit are joined together into a movable production unit, provided with a steam generator and a current generator, and in that the incubating and cooling chamber is devised as a movable unit.

By applying these measures, with which it goes without saying that the various parts of the plant are interconnected by suitable conduits and that the required control equipment is fitted, it is possible to continuously produce farm yoghurt on the farm at a high production capacity, and the same amount of farm yoghurt can be produced within one fifth to one sixth of the time the farmer previously required, and the farm yoghurt has a constant, first-rate quality.

In a preferred embodiment of the plant according to the invention, the movable production unit is mounted on a trailer and the incubating and cooling unit is housed in a container.

In this way, a quite easy manner of transportation is attained at the lowest possible costs, as the trailer is easily movable by means of a common truck and the incubating and cooling container, the dimensions of which are equal to that of standardized transport containers, by means of a container trailer.

The invention will be further elucidated on the basis of the drawing by means of an embodiment.
Figure 1 is a schematic top view of the interior of the movable production unit according to the invention,
figure 2 is a schematic side view of the plant according to figure 1,
figure 3 is a schematic top view of the interior of an incubating and cooling container, and
figure 4 is a schematic side view of the container according to figure 3.

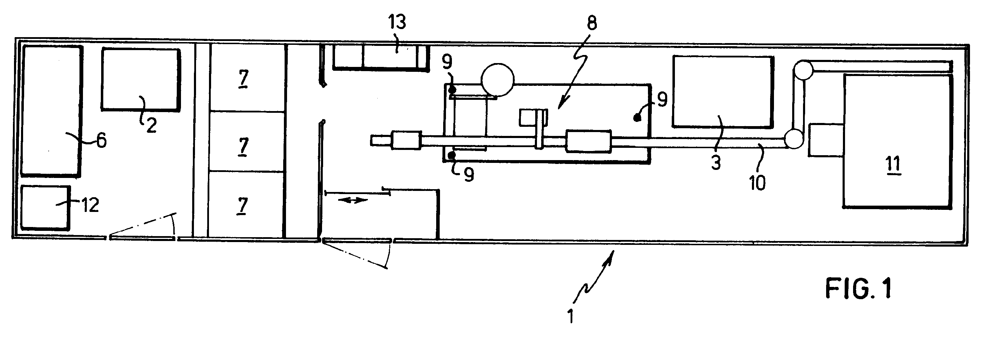

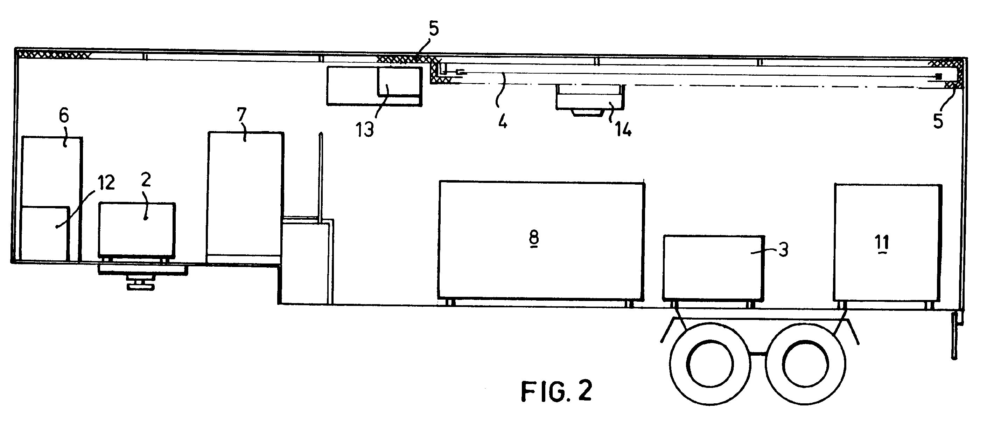

To begin with, the plant according to figures 1 and 2 will be discussed hereinafter, which plant is devised as a trailer 1, upon which the production unit is disposed, meeting, together with a truck (not shown) to be placed in front thereof, the statutory maximum dimensions and the maximum weight and axle pressure, respectively, for such a combination when using the public road.

The trailer 1 is placed at a farm, after which the milk storage tank of the farmer is connected by means of a conduit with a pump (not drawn) to the separator 2. Said separator 2 is electrically driven and removes any possible contaminations and other foreign substances from the milk and separates the fat from the milk. From the separator 2 the milk is fed to the pasteurizer 3, heating the milk to ± 90°C, after which the milk is passed on to the so-called endurance heater 4, whose actual function is to store the milk for the desired period of time, viz. for ± 5 minutes, and meanwhile to keep the temperature at about 80°C. For that purpose the endurance heater 4 has been insulated in the required manner, vide the layers of insulation material 5.

From the endurance heater the milk is again pumped to the pasteurizer 3, where the heated milk is cooled down to ± 45°C and, with the aid of the thus released heat and steam from a steam generator 6, the fresh, supplied milk is simultaneously heated to ± 90°C. The steam generator 6 applied in the production unit preferably consists in a Clayton boiler. The cooled milk is conducted from the pasteurizer 3 into the inoculation tanks 7, where the milk is inoculated according to the known process and such at a temperature of ± 45°C, said inoculation tanks 7 being provided with stirring devices (not shown).

The acidified milk is pumped from the inoculation tanks 7 into a filling machine 8, filling the acidified milk in e.g. plastic beakers and sealing said beakers with e.g. a tear-off foil (not shown).

As said filling machine 8 for plastic beakers is a relatively sensitive device, i.e. a type of precision machinery that is quite liable to disturbances if deformations would occur in the machine, the filling machine 8 according to the invention is supported on a three-point support 9 and the trailer 1 with the production unit is furthermore provided with pneumatic suspension, and this arrangement is intended to prevent the filling machine 8 from twisting about its longitudinal axis, as this is one of the main causes of disturbance, and to support the entire trailer with the production unit in the best possible way, i.a. in a floating manner. At the three points 9 indicated above, the filling machine is always supported by means of a nut on a screw spindle (not shown).

The beakers, filled with yoghurt and sealed, are then conveyed to a packaging machine 11 by means of a conveyor 10, said packaging machine e.g. packaging the beakers in cardboard trays, crates, boxes and the like.

The entire production process in the production unit on the trailer lasts ± 1 hour.

The trailer 1 with the production unit furthermore comprises an electrical generator 12, serving to replenish (if required) the electrical energy from the public electricity network, and supplying current to all parts of the plant and auxiliary devices, such as pumps, compressors, stirring devices and the like, a compressor 13 that supplies pressurized air to the filling machine 8 and the packaging machine 11, and an air-conditioning unit 14, providing a slight superatmospheric pressure in the trailer 1, so that penetration of dust and other contaminations is prevented to the greatest possible extent, and also effecting a possible decrease in temperature of the air in the trailer down to 4°C below the ambient temperature.

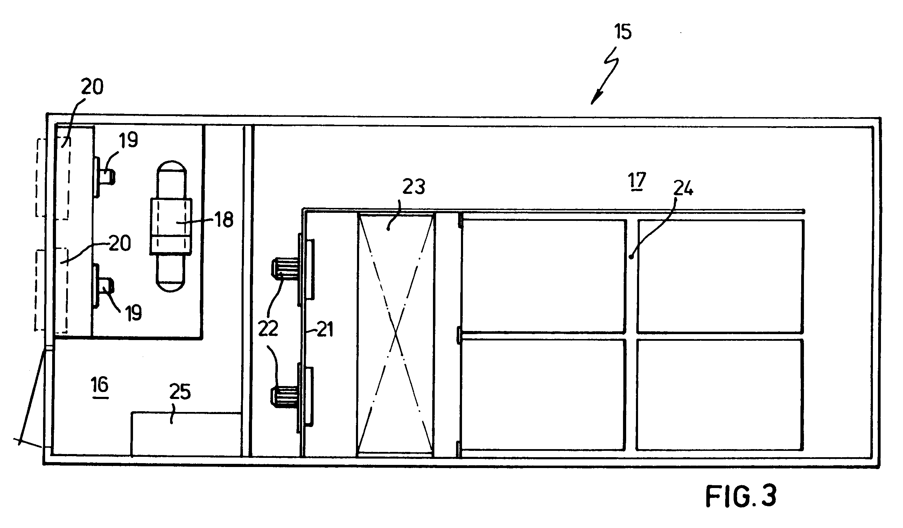

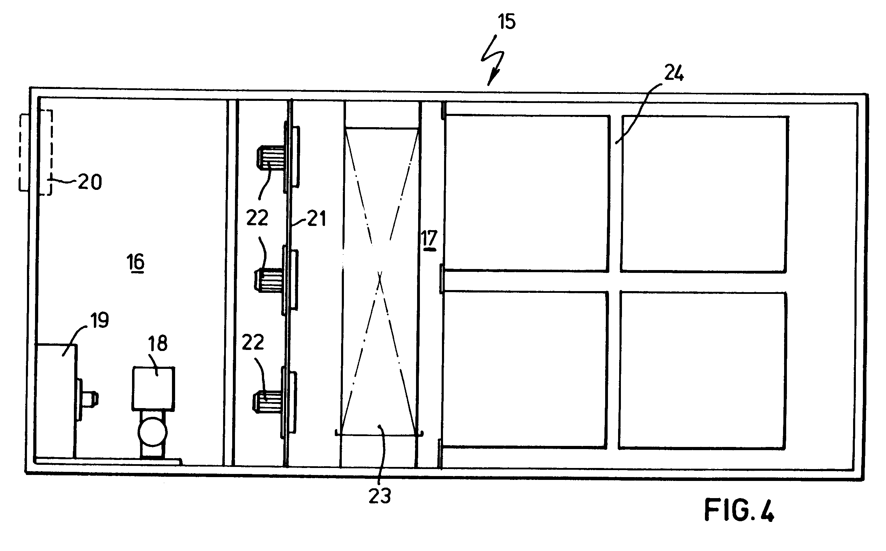

The plant according to the invention furthermore comprises one or more incubating and cooling containers 15, vide figures 3 and 4, whose dimensions meet the international statutory standards from containers for transport by road, water or air, so that they can easily be transportedd by means of trucks suited for that purpose.

As the trailer 1 with the production unit, the incubating and cooling container 15 consists of an entirely sealable housing, divided into two compartments 16 and 17. A compressor 18 and two or more air coolers 19 are disposed in compartment 16, as well as two or more heating elements 20. The compressor 18 and the air coolers 19 supply cooled air to the rear compartment 17 and by means of the heating elements 20 relatively hot air can be supplied to the compartment 17. Six fans 22 are mounted in an intermediate wall 21 in compartment 17, said fans blowing cooled or heated air through an air distributor 23, evenly dividing the air over a rack 24 with eg.g. two layers of each four shelves, each shelf being able to contain a pallet (not shown) with filled trays or crates of beakers filled with farm yoghurt.

The front compartment 16 moreover comprises a control device 25 for the various parts of the incubating and cooling container 15.

According to the invention, the incubating and cooling container 15 comprises at least one pH-indicator (not shown), which is connected to 3 or 4 (or more) beakers with farm yoghurt and which switches the action in the incubating container 15 from incubating over to cooling, as soon as the yoghurt in the beakers has attained the desired or preset pH, respectively.

In the container 15, the farm yoghurt is first heated during ± 3 hours at ± 45°C and then cooled down to ± 5°C for ± 4 hours.

According to the present invention, the production process for farm yoghurt can be outlined as follows:
1. The farmer fills a tank, the contents of which may vary from 2000 to 5000 l or even more, with milk.
2. The trailer 1 with the production unit and one or more incubating and cooling containers 15 are taken to the farmer.
3. The farmer prepares the farm yoghurt along the above-described process, which requires ± 3 workers for the production unit and 1 for the incubating and cooling container 15.
4. After a total production and preparing period of ± 8 hours, the product can be delivered ready-made.

## Claims

1. Plant for producing yoghurt, particularly so-called farm yoghurt, comprising a milk storage tank, a pasteurizer, a separator, an endurance heater, one or more inoculation tanks, a filling machine, a packaging unit and also an incubating and cooling chamber, **characterized in that** at least the separator (2), the pasteurizer (3), the endurance heater (4), the inoculation tanks (7), the filling machine (8) and the packaging unit (11) are joined together into a movable production unit, provided with a steam generator (6) and a current generator (12), and in that the incubating and cooling chamber is devised as a movable unit (15).

2. Plant according to claim 1, **characterized in that** the movable production unit is placed on a trailer (1) and in that the incubating and cooling unit is housed in a container (15).

3. Plant according to claim 1 or 2, **characterized in that** the filling machine (8) is supported on a three-point support (19).

4. Plant according to claim 2 or 3, **characterized in that** at least the trailer (1) with the production unit is provided with pneumatic suspension.

5. Plant according to one of the preceding claims, **characterized in that** the steam generator is a Clayton boiler (6).

6. Plant according to one of the preceding claims, **characterized in that** the incubating and cooling container (15) is provided with a pH-indicator, which can switch over the incubating and cooling container (15) from incubating to cooling.

## Patentansprüche

1. Vorrichtung zum Herstellen von Yoghurt, insbesondere von sogenanntem Farm-Yoghurt, mit einem Milch-Vorrattank, einer Pasteurisier-Vorrichtung, einem Separator, einem Dauer-Erhitzer, einem oder mehreren Impf-Tanks, einer Füllmaschine, einer Verpackungseinheit und einer Inkubations- und Kühlkammer, dadurch **gekennzeichnet**, daß wenigstens der Separator (2), die Pasteurisier-Vorrichtung (3) und der Dauer-Erhitzer (4), die Impf-Tanks (7), die Füllmaschine (8) und die Verpackungseinheit (11) in einer beweglichen Produktionseinheit zusammengefaßt sind, die mit einem Dampferzeuger (6) und einem Stromgenerator (12) versehen ist und daß die Inkubations- und Kühlkammer in einer bewegbaren Einheit (15) abgetrennt sind.

2. Vorrichtung nach Anspruch 1, dadurch gekennzeichnet, daß die bewegliche Produktionseinheit auf einem Anhänger (1) angeordnet ist und daß die Inkubations- und Kühleinheit in einem Behälter (15) enthalten ist.

3. Vorrichtung nach einem der Ansprüche 1 oder 2, dadurch gekennzeichnet, daß die Füllmaschine (8) durch eine Dreipunkt-Lagerung (19) abgestützt wird.

4. Vorrichtung nach einem der Ansprüche 2 oder 3, dadurch gekennzeichnet, daß wenigstens der Anhänger (1) mit der Produktionseinheit mit einer pneumatischen Aufhängung versehen ist.

5. Vorrichtung nach einem der vorangegangenen Ansprüche, dadurch gekennzeichnet, daß der Dampferzeuger ein Clayton-Boiler (6) ist.

6. Vorrichtung nach einem der vorangegangenen Ansprüche, dadurch gekennzeichnet, daß der Inkubations- und Kühlbehälter (15) mit einem pH-Indikator versehen ist, der den Inkubations- und Kühl-Behälter (15) von der Inkubation zur Kühlung umschalten kann.

## Revendications

1. Installation de préparation de yaourt, en particulier de yaourt fermier, comprenant un réservoir de stockage de lait, un pasteurisateur, un séparateur, un appareil de chauffage et de maintien à température, un ou plusieurs réservoirs d'inoculation, une machine de remplissage, une unité de conditionnement et une chambre d'incubation et de refroidissement, caractérisée en ce que le séparateur (2), le pasteurisateur (3), l'appareil de chauffage et de maintien à température (4), les réservoirs d'inoculation (7), la machine de remplissage (8) et l'unité de conditionnement (11) sont réunis en une unité de préparation mobile pourvue d'un générateur de vapeur (6) et d'une génératrice électrique (12), et que la chambre d'incubation et de refroidissement constitue une unité mobile (15).

2. Installation suivant la revendication 1, caractérisée en ce que l'unité de préparation mobile est montée sur une remorque (1) et que l'unité d'incubation et de refroidissement est logée dans un conteneur (15).

3. Installation suivant la revendication 1 ou 2, caractérisée en ce que la machine de remplissage (8) est supportée sur un support en trois points (9).

4. Installation suivant la revendication 2 ou 3, caractérisée en ce qu'au moins la remorque (1) portant l'unité de préparation est pourvue d'une suspension pneumatique.

5. Installation suivant l'une quelconque des revendications précédentes, caractérisée en ce que le générateur de vapeur est une chaudière de Clayton (6).

6. Installation suivant l'une quelconque des revendications précédentes, caractérisée en ce que le conteneur d'incubation et de refroidissement (15) est pourvu d'un indicateur de pH qui peut commuter le conteneur d'incubation et de refroidissement (15) de l'incubation au refroidissement.
